# EUROPEAN PATENT APPLICATION

(11) **EP 4 813 813 A1**
(43) Date of publication of application: **30.09.2026**
(21) Application number: 25165732.6
(22) Date of filing: 24.03.2025
(51) Int. Cl.: B62D 25/08, B62D 29/00

(54) **REAR PART STRUCTURE FOR A VEHICLE BODY**

(71) Applicant: Volvo Car Corporation, 405 31 Göteborg (SE)
(72) Inventor: LEJVELL, Peter, 40531 Göteborg (SE); PETTERSSON, Lars, 40531 Göteborg (SE); CLARK, Austen, 40531 Göteborg (SE)
(74) Representative: Kransell & Wennborg KB

(57) **Abstract**

The disclosure relates to a rear part structure (10) for a vehicle body, wherein the rear part structure (10) comprises a base part (20) and a plate part (30) attached to the base part (20), wherein the base part (20) is made from a metal casting, and wherein the plate part (30) is attached to a base part portion (21) of the base part (20), thereby forming a beam segment (40) in the rear part structure (10), wherein the plate part (30) is attached by one or more fasteners (1) to one or more base part members (22) of the base part portion (21).

## Description

### TECHNICAL FIELD

The present disclosure relates to a rear part structure for a vehicle body and a method for manufacturing a rear part structure.

### BACKGROUND

Vehicle bodies can comprise several different structures, which may be attached to one another. One of these structures is the rear part structure, which is generally located in the rear end of a vehicle. Typically, the rear part structure is being inter alia used for a trunk of the vehicle, where the rear part structure supports a luggage compartment floor inside the trunk. Luggage or other loads can be placed on the luggage compartment floor inside the trunk and is consequently supported by the rear part structure. The rear part structure however can have many more parts attached thereto, such as, for example, shock absorbers or generally a rear vehicle suspension, batteries, and so on.

The rear part structure typically may comprise a rear crossmember, which is a beam segment that may benefit the overall stiffness and Noise, Vibration, Harshness (NVH) attributes related to the rear floor area of the vehicle. By providing lateral stiffness to the structure, especially where the subframe and the suspension of the vehicle are connected, this beam segment can eliminate radiation of vibrations into the rear part structure during use. The crossmember also provides stiffness to flat areas of the floor, which can also vibrate and create noise at certain frequencies.

However, when the rear part structure is advantageously casted from metal, specifically as a single part in the form of a mega casting, the casting process makes it difficult to include the beam segment in the rear part structure.

For example, for the mega casting, a High-Pressure Die Casting (HDPC) process may be used, where the molten metal, such as but not limited to aluminum, is pushed into a die or, in other words, mold. This die consists of die tools that are pressed together and sealed just SE:AFE
before the molten metal is pushed in. After the metal is pushed in, the tools are retracted, and the die opens again, and the casted metal rear part structure can be removed from the open die.

This means that the design of the rear part structure must be adapted to the die tools and the direction in which they move when opening and closing the die. In the case of the rear part structure, surfaces between wheel housing portions may for example be created by a die tool that moves vertically, and the outside of the wheelhouse portions may be made by die tools that move horizontally. The die tools also need to have a certain draft angle so that the aluminum does not get stuck in the die tools when the die tools release and open the die.

A drawback this method of manufacturing a rear part structure for a vehicle body is that it is not possible to cast closed sections since the die tools for closing the die need to be detracted to be able to take out the casted rear part structure from the die. This creates open sections in the die tools moving direction. At some areas, these open sections may not be desirable. One of these areas is the location of the crossmember on the rear part structure of the vehicle since an open section contributes less to the overall stiffness and NVH attributes of the rear part structure.

### SUMMARY

The problem is at least partially solved or alleviated by the subject matter of the independent claims of the present disclosure, wherein further examples are incorporated in the dependent claims.

According to a first aspect, there is provided a rear part structure for a vehicle body, wherein the rear part structure comprises a base part and a plate part attached to the base part, wherein the base part is made from a metal casting, and wherein the plate part is attached to a base part portion of the base part, thereby forming a beam segment in the rear part structure, wherein the plate part is attached by one or more fasteners to one or more base part members of the base part portion.

The rear part structure may in particular be part of a trunk or generally a compartment of the vehicle or, in other words, form at least partially a trunk or compartment of the vehicle, in particular a support structure for the trunk such that luggage or other loads can be supported and consequently transported in the rear of the vehicle.

The vehicle body may in particular be a car body, more particularly a passenger car body. The vehicle body may comprise one or more further structures in addition to the rear part structure, e.g., a front part structure and/or a middle part structure, to which the rear part structure may be attachable to form the vehicle body.

The base part of the rear part structure may be substantially larger in size than the plate part and/or any other part of the rear part structure. That is because the base part is the part that is casted from metal, in particular as a single part from metal in a mega casting process as described herein. The base part may be designed as a one-piece or monolithic structure. The base part may comprise several members and portions as described herein, e.g. wheelhouse portions. The base part portion may in particular be a central and/or lower floor part of the rear part structure. All portions and members of the base part may be integrally designed with one another, meaning that all these members and portions are part of the one-piece or monolithic structure of the base part. The rear part structure may be made from one single material, specifically a metal, e.g., aluminum or an aluminum alloy. Such aluminum casting may be made entirely from aluminum or can comprise aluminum, e.g., predominantly aluminum, and other materials, specifically metals.

The plate part may be separately formed or designed from the base part. In particular, the plate part may be manufactured in a different process than casting, e.g. using stamping and/or bending or similar. The plate part may for example be made from a sheet metal. The plate part is a part that generally has a plate-type shape. This means that the plate part has a significantly larger surface area on two opposite sides than on all other sides of the plate part. In other words, the plate part has a significantly larger width and length than height in terms of the pure plate-type shape. However, the plate part may be bend. In other words, the plate part does not need to be limited to a rectangular plate but could also be a plate having an angular shape or form.

Advantageously, to form the beam segment in the rear part structure to benefit from an increased overall stiffness and improved NVH attributes in the rear part structure which such an open section provides, the plate part is being provided and secured to the metal casted base part using one or more fasteners, where the fasteners attach to one or more base part members of the base part portion. Thereby, despite the limited ability or inability to form closed sections during the casting process in the rear part structure in order to provide for a beam segment, specifically a crossmember, on the rear part structure, the beam segment can still be provided in a simple yet efficient way. For this purpose, merely the plate part needs to be separately manufactured and attached to the base part portion using the one or more fasteners. Advantageously, the plate part with its plate-type shape provides for little addition of weight and can geometrically complement an angularly shaped portion of the base part such that they together form the beam segment.

In an example, a least one of the one or more base part members may be formed as a rib. Advantageously, such base part members can be provided with little weight and material additions to the rear part structure, can safely secure the plate part to the base part due to their stiff design, and can further add stiffness to the base part.

In an example, the rib may longitudinally extend substantially in parallel to a long base portion side of the base part portion. The long base portion side may be forming a long beam segment side of the beam segment extending along a length of the beam segment. The long base portion and/or the length of the beam segment may be extending perpendicular to a longitudinal extension of the vehicle body or vehicle, may be extending in parallel to an axle of the vehicle, and/or may be extending between opposite wheelhouse portions of the rear part structure. Accordingly, the beam segment may be alternatively referred to as a crossmember, specifically an axle crossmember. The long base portion side of the base part portion is the longest or long side of that portion, which may also be the longest or long side of the beam segment formed therewith and the plate part. By having the rib to substantially extend in parallel to the long base portion side of the base part portion, the plate part can advantageously be attached to the rib in a sufficiently rigid and reliable manner along the length of the plate part.

In an example, the rib may be arranged on a further long base portion side of the base part portion. The further long base portion side may be arranged transverse to the long base portion side and forming a further long beam segment side of the beam segment extending along the length of the beam segment. Accordingly, the beam segment may for example be formed by two or three sides of the base part portion, specifically at least by the long base portion side and the further long base portion side. On the other hand, the beam segment may be formed by one or two sides of the plate part, such that a beam segment with four long sides is provided. Advantageously, the rib may now be provided on one of those long base portion sides of the base part portion such that the rigidity of the connection and the beam segment may be increased without necessitating further parts or complexity on the base part.

In an example, at least one of the one or more base part members may be formed as a pocket. A pocket may be generally seen as a shape or structure that extends out of a given shape, in this case of the base part portion, such that a pocket, in particular with an at least partially hollow structure or similar, inside the portion is formed.

In an example, the pocket may be convexly extended out of a long base portion side of the base part portion towards the plate part, the long base portion side extending along a length of the base part portion. The pocket is a bulky variant to the rib form of the base part member. Advantageously, the pocket can be formed out of the shape of the base part portion and hence does not require additional material like the rib.

In an example, a long plate part side of the plate part may be arranged at a pocket side of the pocket extended out of the long base portion side, the one or more fasteners securing the long plate part side to the pocket side. The long plate part side may be the longest or long side of any one of the sides of the plate part.

In an example, the base part portion may comprise two base part members, to which the plate part may be attached, each one of the base part members being located at one of two opposite longitudinal ends of the beam segment. Thereby, a secure and stable connection may be established using only or particularly opposite longitudinal ends of the beam segment. Specifically, connections in between these ends may not be required and can be omitted.

In an example, the one or more base part members may be located adjacent to one or more further beam segments of the rear part structure, the one or more further beam segments extending in length transverse to the extension in length of the beam segment.

In an example, the beam segment may be located at a rear-end of the rear part structure, at a front-end of the rear part structure, or may extend in between the rear-end and the front-end of the rear part structure. The rear-end of the rear part structure may be where a bumper is attached to the rear part structure. For this purpose, the rear part structure may comprise a section configured for attachment of the bumper thereto. Specifically, but not limited thereto, this section may be configured to receive an extruded connection beam, that may be connected to the bumper through one or more connection means such as but not limited to screws- The front end of the rear part structure may be on the opposite end of the rear-end and the other variant is that the beam extends in between the rear-end and the front-end.

In an example, the rear part structure may comprise two or more beam segments, each one being formed by a different plate part attached to a different base part portion of the base part. Each beam segment and plate part and base part portion may be configured as described herein.

In an example, two or more beam segments may be located at different locations, the locations being from: a rear-end of the rear part structure, a front-end of the rear part structure, and in between the rear-end and the front-end of the rear part structure. Thereby, the increased stiffness and NVH attributes may be provided at different locations of the rear part structure.

In an example, the one or more fasteners may be flow drill screws. Flow drill screws or, in other words, fasteners require only access from one side and can also join two different materials, in case the plate part is from a different material than the base part, e.g., steel for the plate part and aluminum for the base part. However, as it's a screw that penetrates both parts the tip of the screw may be covered for safety purposes and the total thickness of the two joining parts may be provided be under a certain limit.

In an example, the plate part may be made from a sheet metal.

In an example, the plate part may comprise a substantially I-shaped or L-shaped profile. The profile refers to the cross-section of the plate part. The I-shaped profile may be a substantially flat profile. An L-shaped profile may be an angular profile comprising two substantially flat sections angled at one another, approximately perpendicular.

In an example, the base part may further comprise wheelhouse portions for partially housing a wheel therein. The wheelhouse portions may be located at opposite ends of the rear part structure with the beam segment extending in between the opposite ends of the rear part structure. The wheelhouse portions may generally comprise a convex or bulge shape, which may be extending with its convex or bulge shape towards the base part portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions. At least one wheelhouse portion may comprise a shock absorber segment for receiving a shock absorber. A floor support structure can be supported in between the wheelhouse portions and/or on the base part portion. The floor support structure may be configured to support a floor thereon.

According to a second aspect, there is provided a method for manufacturing a rear part structure according to the first aspect, wherein the method comprises:
- casting the base part of the rear part structure from metal, the base part comprising the base part portion with the one or more base part members;
- aligning the plate part with the base part portion for forming the beam segment; and
- attaching the plate part to the base part by flow drilling the one or more fasteners through the plate part and the one or more base part members.
The thereby formed beam segment may be advantageously used for additional purposes, such as to providing connectors on the plate part, e.g., which may be used for the purpose of having luggage components attached thereto. Accordingly, the method may further provide for a step of providing one or more connectors on the plate part, e.g., by attaching connectors thereto.

According to a further aspect, there may be provided a vehicle body comprising the rear part structure of the first aspect.

According to yet another aspect, there may be provided a vehicle comprising the rear part structure of the first aspect or the vehicle body of the aforementioned aspect.

It is noted that the above examples may be combined with each other irrespective of the aspect involved. Specifically, steps from the method may be combined with structural features of the rear part structure and vice versa.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a base part of a rear part structure after being formed between die tools;
- Figure 2: shows a perspective partial view on the base part of the rear part structure of Fig. 1;
- Figure 3: shows a different perspective partial view on the base part of Fig. 2;
- Figure 4: shows an enlarged view of the base part of Fig. 2;
- Figure 5: shows a rear part structure with the base part of Fig. 2 and a plate part attached thereto;
- Figure 6: shows a perspective partial view on an alternative base part of the rear part structure of Fig. 1;
- Figure 7: shows a rear part structure with the base part of Fig. 6 and a plate part attached thereto;
- Figure 8: shows a cross-sectional view through the rear part structure of Fig. 5;
- Figure 9: shows a cross-sectional view through the rear part structure of Fig. 7;
- Figure 10: shows a front view on the rear part structure of Fig. 9;
- Figure 11: shows a schematic cross-sectional view of the rear part structure of Fig. 8; and
- Figure 12: shows a schematic cross-sectional view of the rear part structure of Fig. 9.

### DETAILED DESCRIPTION

The Figures are merely schematic representations and serve only to illustrate examples of the disclosure. Identical or equivalent elements are in principle provided with the same reference signs.

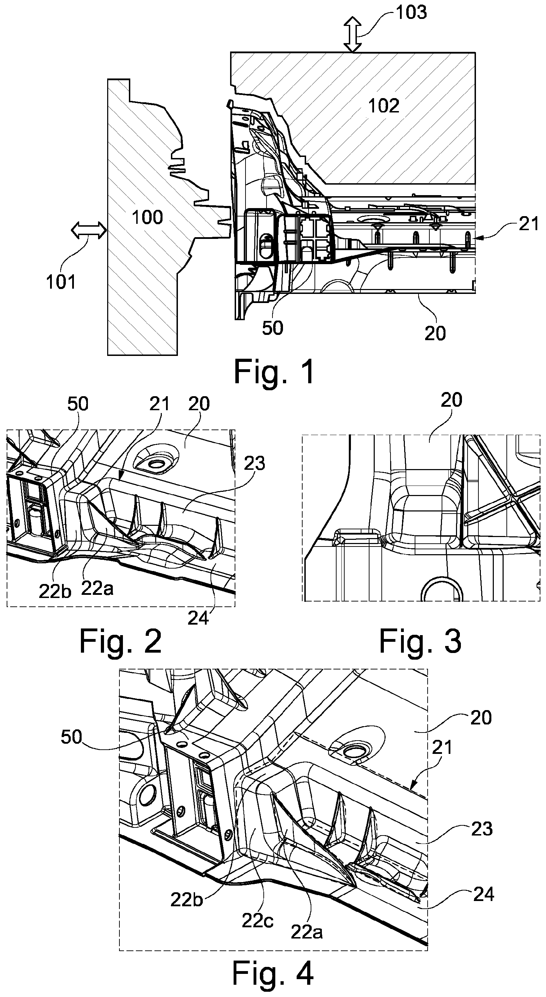

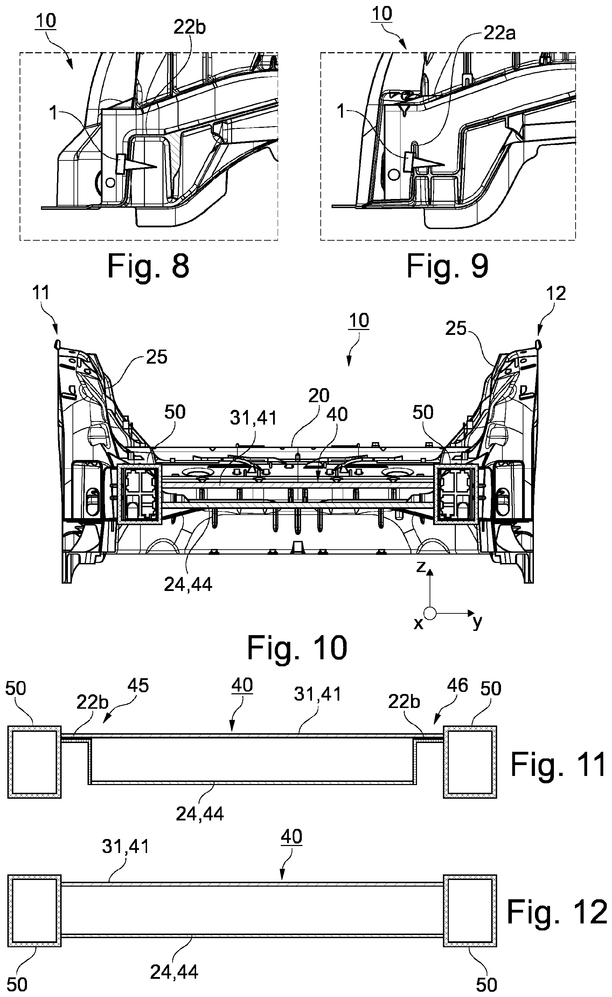

Fig. 1 shows a perspective view on a base part 20 of a rear part structure 10 for a vehicle body as seen in Fig. 10. The rear part structure 10 comprises a base portion 20, which may comprise two wheelhouse portions 25. The wheelhouse portions 25 can be located at opposite ends 11, 12 of the base portion 20 or rear part structure 10. The wheelhouse portions 25 are arranged for partially housing a wheel therein. The base part 20 and/or a base part portion 21 thereof may extend in length between the two wheelhouse portions 25 (see Fig. 10).

For manufacturing the base part 20 of the rear part structure 10 by casting it from metal, specifically as a single part in the form of a mega casting, the casting process makes it difficult to include a beam segment in the rear part structure 10. Specifically, Fig. 1 shows the casting process of the base part 20 as part of the rear part structure 10 using die tools 100, 102, which are retrieved from the mold in opposite directions 101, 103.

To still provide a beam segment 40 on the base part 20 and thereby form a stiff and strong rear part structure 10, a plate part 30 is attached to the base part 20 as can be seen in Figs. 11 and 12. In this example, the beam segment 40 is formed at a rear-end of the rear part structure 10.

As seen in Figs. 8 and 9 specifically, the plate part 30 may be attached by one or more fasteners 1 to one or more base part members 22 of the base part portion 21 of the base part 20.

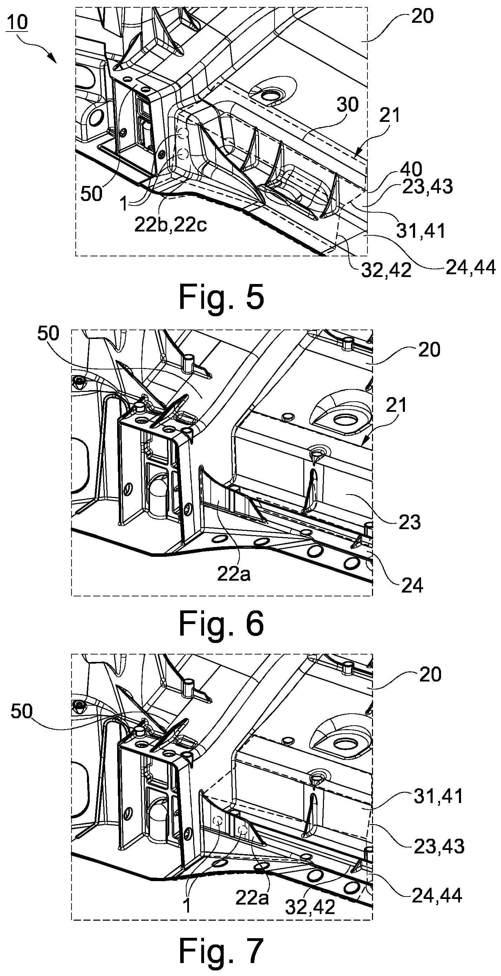

Figs. 2 to 4 show different views of a possible embodiment of the base part 20. In this example, the base part portion 21 comprises the base part members 22a, 22b as seen in Figs. 2 and 4 for attachment of the plate part 30 thereto. In this example, one of the base part members 22 is formed as a rib 22a. The rib 22a longitudinally extends substantially in parallel to a long base portion side 23 of the base part portion 21. The long base portion side 23 forms a long beam segment side 43 of the beam segment 40 extending along a length of the beam segment 40 when the plate part 30 is attached to the base part 20 as seen in Fig. 5, for example.

In this example, the rib 22a is arranged on a further long base portion side 24 of the base part portion 21. The further long base portion side 24 is arranged transverse to the long base portion side 23 and forms a further long beam segment side 44 of the beam segment 40 extending along the length of the beam segment 40 when the plate part 30 is attached to the base part 20.

Moreover, in the example of Figs. 2 to 4, one of the base part members 22 is formed as a pocket 22b. The pocket 22b is convexly extended out of the long base portion side 23 of the base part portion 21 towards the plate part 30.

As seen in Fig. 5 of the base part 20, with the plate part 30 is attached to the base part portion 21, a long plate part side 31 of the plate part 30 may be arranged at a pocket side 22c of the pocket 22b extended out of the long base portion side 23, and with the one or more fasteners 1 securing the long plate part side 31 to the pocket side 22c. The long plate part side 31 may form a further long beam segment side 41 of the beam segment 40.

Further, in this example, there is a further long plate part side 32 arranged angular at the long plate part side 31 and parallel to and/or opposite of the long base portion side 23. The further long plate part side 32 forms a further long beam segment side 42 of the beam 40.

In Fig. 5, the plate part 30 may additionally or alternatively be attached to the rib 22a. However, the rib 22a may alternatively not be used for attachment and merely act as a reinforcement rib of the pocket 22b. Also, the rib 22a may be omitted in the embodiment of Figs. 2 to 5.

An alternative embodiment of the base part 20 is shown in Figs. 6 and 7. Here, no pocket 22b is provided. Instead, a rib 22a is provided as a base part member 22, to which the plate part 30 is attached with its further long plate part side 32 using exemplarily two fasteners 1.

As seen in either of Figs. 5 and 7, the base part members 22 are located adjacent to or are directly formed with or attached to a further beam segment 50 of the rear part structure 10, which extends in length transverse to the extension in length of the beam segment 40. This further beam segment 50 may provide additional reinforcement or stiffening of the rear part structure 10 along an extension of the rear part structure 10 transverse to the extension of the rear part structure 10 along the beam segment 40.

Figs. 8 and 9 show the fasteners 1 in the form of flow drill screws attaching the plate parts 30 to the base part portions 21, specifically their respective base part member in form of the rib 22a in Fig. 9 according to the embodiment of Figs. 6 and 7 and base part member 22b in form of the pocket 22b in Fig. 8 according to the embodiment of Figs. 2 to 5.

Fig. 10 shows the assembled rear part structure 10 with the plate part 30 being attached along the entire base part portion 21, thereby forming the beam segment 40 extending in between two further beam segments 50 extending transverse to the beam segment 40 and adjacent to the wheelhouse portions 25.

From the coordinate system shown in Fig. 10, it can be seen that the beam segment 40 extends longitudinally in the y-direction, whereas the further beam segments 50 extend longitudinally in the thereto perpendicular x-direction. A height of the beam segments 40, 50 and generally the rear-part structure 10 can be determined in the z-direction.

In this example, the base part portion 21 extending in between the further beam segments 50 or the wheelhouse portions 25 comprises two base part members 22 to which the plate part 30 is attached, each one of the base part members 22 being located at one of two opposite longitudinal ends 45, 46 of the beam segment 40 as seen in Fig. 11.

Specifically, Figs. 11 and 12 show schematically simplified illustrations of the beam segment 40 and the further beam segments 50 with their extensions. Fig. 11 corresponds to the embodiment using the pockets 22b of Figs. 2 to 5 for attachment of the plate part 30, where the pockets 22b create a gap or space between the further beam segments 50 and the beam segment 40. This is not the case with the embodiment using the ribs 22a for attachment of the plate part 30, where the plate part 30 is directly and/or adjacently attached near or next to the further beam segments 50, thereby creating an even stiffer and stronger overall rear part structure 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: rear part structure
- 11, 12: opposite ends of the rear part structure
- 20: base part
- 21: base part portion
- 22: base part member
- 22a: rib
- 22b: pocket
- 22c: pocket side
- 23: long base portion side
- 24: further long base portion side
- 30: plate part
- 31: long plate part side
- 32: further long plate part side
- 40: beam segment
- 41: further long beam segment side
- 42: further long beam segment side
- 43: long beam segment side
- 44: further long beam segment side
- 45, 46: opposite longitudinal ends of the beam segment
- 50: further beam segment

## Claims

1. A rear part structure (10) for a vehicle body, wherein the rear part structure (10) comprises a base part (20) and a plate part (30) attached to the base part (20), wherein the base part (20) is made from a metal casting, and wherein the plate part (30) is attached to a base part portion (21) of the base part (20), thereby forming a beam segment (40) in the rear part structure (10), wherein the plate part (30) is attached by one or more fasteners (1) to one or more base part members (22) of the base part portion (21).

2. The rear part structure (10) of claim 1, wherein at least one of the one or more base part members (22) is formed as a rib (22a).

3. The rear part structure (10) of claim 2, wherein the rib (22a) longitudinally extends substantially in parallel to a long base portion side (23) of the base part portion (21), the long base portion side (23) forming a long beam segment side (43) of the beam segment (40) extending along a length of the beam segment (40).

4. The rear part structure (10) of claim 3, wherein the rib (22a) is arranged on a further long base portion side (24) of the base part portion (21), the further long base portion side (24) being arranged transverse to the long base portion side (23) and forming a further long beam segment side (44) of the beam segment (40) extending along the length of the beam segment (40).

5. The rear part structure (10) of any one of the previous claims, wherein at least one of the one or more base part members (22) is formed as a pocket (22b).

6. The rear part structure (10) of claim 5, wherein the pocket (22b) is convexly extended out of a long base portion side (23) of the base part portion (21) towards the plate part (30), the long base portion side (23) extending along a length of the base part portion (21).

7. The rear part structure (10) of claim 6, wherein a long plate part side (31) of the plate part (30) is arranged at a pocket side (22c) of the pocket (22b) extended out of the long base portion side (23), the one or more fasteners (1) securing the long plate part side (31) to the pocket side (22c).

8. The rear part structure (10) of any one of the previous claims, wherein the base part portion (21) comprises two base part members (22), to which the plate part (30) is attached, each one of the base part members (22) being located at one of two opposite longitudinal ends (45, 46) of the beam segment (40).

9. The rear part structure (10) of any one of the previous claims, wherein the one or more base part members (22) are located adjacent to one or more further beam segments (50) of the rear part structure (10), the one or more further beam segments (50) extending in length transverse to the extension in length of the beam segment (40).

10. The rear part structure (10) of any one of the previous claims, wherein the beam segment (40) is located at a rear-end of the rear part structure (10), at a front-end of the rear part structure (10), or extends in between the rear-end and the front-end of the rear part structure (10).

11. The rear part structure (10) of any one of the previous claims, wherein the rear part structure (10) comprises two or more beam segments (40), each one being formed by a different plate part (30) attached to a different base part portion (21) of the base part (20).

12. The rear part structure (10) of any one of the previous claims, wherein the one or more fasteners (1) are flow drill screws.

13. The rear part structure (10) of any one of the previous claims, wherein the plate part (30) is made from a sheet metal.

14. The rear part structure (10) of any one of the previous claims, wherein the base part (20) further comprises wheelhouse portions (25) for partially housing a wheel therein, the wheelhouse portions (25) being located at opposite ends (11, 12) of the rear part structure (10) with the beam segment (40) extending in between the opposite ends (11, 12) of the rear part structure (10).

15. A method for manufacturing a rear part structure (10) according to any one of the previous claims, wherein the method comprises:
- casting the base part (20) of the rear part structure (10) from metal, the base part (20) comprising the base part portion (21) with the one or more base part members (22);
- aligning the plate part (30) with the base part portion (21) for forming the beam segment (40); and
- attaching the plate part (30) to the base part (20) by flow drilling the one or more fasteners (1) through the plate part (30) and the one or more base part members (22).
